# EUROPEAN PATENT APPLICATION

(11) **EP 4 498 735 A1**
(43) Date of publication of application: **29.01.2025**
(21) Application number: 24190306.1
(22) Date of filing: 23.07.2024
(51) Int. Cl.: H04W 52/02

(54) **MOBILE COMMUNICATION SYSTEM**

(30) Priority: 26.07.2023 GB 202311461
(71) Applicant: Nokia Technologies Oy, 02610 Espoo (FI)
(72) Inventor: NIELSEN, Kim, 9280 Storvorde (DK); JALILI, Feridoon, 9260 Gistrup (DK); HARREBEK, Johannes, 9000 Aalborg (DK); HVIID, Jan Torst, 9270 Klarup (DK); KNUDSEN, Knud, 9440 Aabybro (DK)
(74) Representative: Whiting, Gary

(57) **Abstract**

A method, apparatus and computer program is described comprising: controlling reception of a wake-up signal (WUS) by a first front-end module of a user equipment of a mobile communication system in a low power mode of operation; and controlling transfer of the received wake-up signal from the first front-end module to an output of the first front-end module in the low power mode of operation.

## Description

### Field

The present specification relates to wake-up signals in mobile communication systems.

### Background

The present specification relates to the use and control of wake-up signals in mobile communication systems, for example in user equipment of mobile communication systems.

### Summary

In a first aspect, this specification describes an apparatus (e.g. a wakeup receiver) forming part of a user equipment (e.g. a smart phone or some other device, such as a sensor) of a mobile communication system, the user equipment comprising a first front-end module, a second front-end module, a transceiver module and a baseband processor, wherein the first and second front-end modules are provided between the transceiver module and one or more antennas, the apparatus comprising: means for controlling reception of a wake-up signal by the first front-end module in a low power mode of operation; and means for controlling transfer (e.g. latching) of the received wake-up signal from the first front-end module to an output of the first front-end module in the low power mode of operation. The apparatus may form part of the first front-end module. The apparatus may comprise one or more first front-end modules and/or one or more second front-end modules. The apparatus may be, or may form part of, the first front-end module of the user equipment.

The apparatus may include a "normal" mode of operation and a "new" mode of operation, the new mode of operation being a lower power module in which the same front-end modules are used in both modes.

The apparatus may further comprise means for receiving said wake-up signal from a network node of the mobile communication system.

In some example embodiments, the means for controlling the transfer of the received wake-up signal comprises means for controlling a low noise amplifier of the first front-end module to amplify said wake-up signal in the low power mode of operation.

In some example embodiments, the means for controlling the transfer of the received wake-up signal comprises means for controlling routing of the wake-up signal within the first front-end module such that a low noise amplifier of the first front-end module is bypassed in the low power mode of operation. When bypassing the low noise amplifier, the gain in another amplifier (e.g. an amplifier after a mixer) may be increased.

In some example embodiments, the means for controlling the transfer of the received wake-up signal comprises means for controlling routing of the wake-up signal within the first front-end module such that one or more filters (e.g. bandpass filters) of the first front-end module are bypassed in the low power mode of operation.

In some example embodiments, the means for controlling the transfer of the received wake-up signal comprises means for controlling routing of the wake-up signal within the first front-end module such that the wake-up signal is routed to a dedicated port of the first front-end module in the low power mode of operation.

The first front-end module may enable downlink communication in a normal power mode of operation. The first front-end module may be a diversity module (or a modified diversity module).

The second front-end module may enable uplink and downlink communications in the normal power mode of operation. The second front-end module may be a main radio module (e.g. a modified man radio module).

In some example embodiments, the first and second front-end modules operate in parallel, such that, in use, downlink signals can be simultaneously provided to the transceiver module via both the first and the second front-end modules.

The first front-end module may be a receive only (e.g. diversity) module of the user equipment.

In some example embodiments, a radio module of the transceiver is powered down in the low power mode of operation.

The apparatus may further comprise means for disconnecting a power supply to one or more unused modules in the low power mode of operation.

In some example embodiments, at least one of the first and the second front-end modules support multiple frequency bands (e.g. requiring different bandpass filters).

The apparatus may further comprise means for selecting a single frequency band of the first front-end module for receiving the wake-up signal in the low power mode of operation.

In a second aspect, this specification describes an apparatus (e.g. a wake-up receiver) forming part of a user equipment (e.g. a smartphone or some other device, such as a sensor) of a mobile communication system, the user equipment comprising a first front-end module, a second front-end module, a transceiver module and a baseband processor, wherein the first and second front-end modules are provided between the transceiver module and one or more antennas, the apparatus comprising: means for receiving a wake-up signal from the first front-end module in a low power mode of operation; and means for controlling activation of a radio module (e.g. triggering a wake-up signal to the main radio module) of the transceiver in response to the wake-up signal. The apparatus may form part of a transceiver of the user equipment. Alternatively, the apparatus may be external to the transceiver. The apparatus may form part of the transceiver.

The first front-end module may enable downlink communication in a normal power mode of operation. The second front-end module may enable uplink and downlink communications in the normal power mode of operation.

The transceiver may comprise a switching module that is configured to provide an output of the first front-end module to the apparatus in the low power mode of operation and to provide the output of the first front-end module to the radio module of the transceiver in a normal power mode of operation.

The apparatus (which, as noted above, may be outside the transceiver of the user equipment) may comprise: a switching module for providing an output of the first front-end module to the apparatus in the low power mode of operation; and an output for providing a signal to the transceiver module to control activation of said radio module.

Some example embodiments further comprise means for disconnecting a power supply to one or more unused modules in the low power mode of operation.

At least one of the first and the second front-end modules may support multiple frequency bands (e.g. requiring different bandpass filters).

Some example embodiments further comprise means for selecting a single frequency band of the first front-end module for receiving the wake-up signal in the low power mode of operation.

In the first or the second aspect, the said apparatus may comprise: at least one processor; and at least one memory storing instructions that, when executed by the processor, causes the performance of the apparatus.

In a third aspect, this specification describes a method comprising: controlling reception of a wake-up signal by a first front-end module of a user equipment (e.g. a smart phone or some other device, such as a sensor) of a mobile communication system in a low power mode of operation, wherein the user equipment comprises the first front-end module, a second front-end module, a transceiver module and a baseband processor, wherein the first and second front-end modules are provided between the transceiver module and one or more antennas; and controlling transfer of the received wake-up signal from the first front-end module to an output of the first front-end module in the low power mode of operation.

A "normal" mode of operation and a "new" mode of operation may be provided, the new mode of operation being a lower power module in which the same front-end modules are used in both modes.

The wake-up signal may be received from a network node of the mobile communication system.

Controlling the transfer of the received wake-up signal may comprise controlling a low noise amplifier of the first front-end module to amplify said wake-up signal in the low power mode of operation.

Controlling the transfer of the received wake-up signal may comprise controlling routing of the wake-up signal within the first front-end module such that a low noise amplifier of the first front-end module is bypassed in the low power mode of operation. When bypassing the low noise amplifier, the gain in another amplifier (e.g. an amplifier after a mixer) may be increased.

Controlling the transfer of the received wake-up signal comprise controlling routing of the wake-up signal within the first front-end module such that one or more filters (e.g. bandpass filters) of the first front-end module are bypassed in the low power mode of operation.

Controlling the transfer of the received wake-up signal comprise controlling routing of the wake-up signal within the first front-end module such that the wake-up signal is routed to a dedicated port of the first front-end module in the low power mode of operation.

The first front-end module may enable downlink communication in a normal power mode of operation. The first front-end module may be a diversity module (or a modified diversity module).

The second front-end module may enable uplink and downlink communications in the normal power mode of operation. The second front-end module may be a main radio module (e.g. a modified man radio module).

In some example embodiments, the first and second front-end modules operate in parallel, such that, in use, downlink signals can be simultaneously provided to the transceiver module via both the first and the second front-end modules.

In some example embodiments, a radio module of the transceiver is powered down in the low power mode of operation.

The method may further comprise disconnecting a power supply to one or more unused modules in the low power mode of operation.

In some example embodiments, at least one of the first and the second front-end modules support multiple frequency bands (e.g. requiring different bandpass filters).

The method may further comprise selecting a single frequency band of the first front-end module for receiving the wake-up signal in the low power mode of operation.

In a fourth aspect, this specification describes a method comprising: receiving a wake-up signal from a first front-end module of a user equipment (e.g. a smartphone or some other device, such as a sensor) of a mobile communication system in a low power mode of operation, wherein the user equipment comprises the first front-end module, a second front-end module, a transceiver module and a baseband processor, wherein the first and second front-end modules are provided between the transceiver module and one or more antennas; and controlling activation of a radio module of the transceiver in response to the wake-up signal. The first front-end module may enable downlink communication in a normal power mode of operation. The second front-end module may enable uplink and downlink communications in the normal power mode of operation.

Some example embodiments further comprise disconnecting a power supply to one or more unused modules in the low power mode of operation.

At least one of the first and the second front-end modules may support multiple frequency bands (e.g. requiring different bandpass filters).

Some example embodiments further comprise selecting a single frequency band of the first front-end module for receiving the wake-up signal in the low power mode of operation.

In a fifth aspect, this specification describes computer-readable instructions which, when executed by a computing apparatus, cause the computing apparatus to perform (at least) any method as described herein (including the methods of the third and fourth aspects described above).

In a sixth aspect, this specification describes a computer-readable medium (such as a non-transitory computer-readable medium) comprising program instructions stored thereon for performing (at least) any method as described herein (including the methods of the third and fourth aspects described above).

In a seventh aspect, this specification describes an apparatus comprising: at least one processor; and at least one memory including computer program code which, when executed by the at least one processor, causes the apparatus to perform (at least) any method as described herein (including the methods of the third and fourth aspects described above).

In an eighth aspect, this specification describes a computer program comprising instructions which, when executed by an apparatus, cause the apparatus to: control reception of a wake-up signal by a first front-end module of a user equipment (e.g. a smart phone or some other device, such as a sensor) of a mobile communication system in a low power mode of operation, wherein the user equipment comprises the first front-end module, a second front-end module, a transceiver module and a baseband processor, wherein the first and second front-end modules are provided between the transceiver module and one or more antennas; and control transfer of the received wake-up signal from the first front-end module to an output of the first front-end module in the low power mode of operation. The first front-end module may enable downlink communication in a normal power mode of operation. The second front-end module may enable uplink and downlink communications in the normal power mode of operation.

In an ninth aspect, this specification describes a computer program comprising instructions which, when executed by an apparatus, cause the apparatus to: receive a wake-up signal from a first front-end module of a user equipment (e.g. a smartphone or some other device, such as a sensor) of a mobile communication system in a low power mode of operation, wherein the user equipment comprises the first front-end module, a second front-end module, a transceiver module and a baseband processor, wherein the first and second front-end modules are provided between the transceiver module and one or more antennas; and control activation of a radio module of the transceiver in response to the wake-up signal. The first front-end module may enable downlink communication in a normal power mode of operation. The second front-end module may enable uplink and downlink communications in the normal power mode of operation.

In a tenth aspect, this specification describes: a first control module (or some other means) for controlling reception of a wake-up signal by a first front-end module of a user equipment (e.g. a smart phone or some other device, such as a sensor) of a mobile communication system in a low power mode of operation, wherein the user equipment comprises the first front-end module, a second front-end module, a transceiver module and a baseband processor, wherein the first and second front-end modules are provided between the transceiver module and one or more antennas; and a second control module, which may be the same as the first control module, (or some other means) for controlling transfer of the received wake-up signal from the first front-end module to an output of the first front-end module in the low power mode of operation. The first front-end module may enable downlink communication in a normal power mode of operation. The second front-end module may enable uplink and downlink communications in the normal power mode of operation.

In an eleventh aspect, this specification describes: wake-up receiver module (or some other means) for receiving a wake-up signal from a first front-end module of a user equipment (e.g. a smartphone or some other device, such as a sensor) of a mobile communication system in a low power mode of operation, wherein the user equipment comprises the first front-end module, a second front-end module, a transceiver module and a baseband processor, wherein the first and second front-end modules are provided between the transceiver module and one or more antennas; and a control module (or some other means) for controlling activation of a radio module of the transceiver in response to the wake-up signal. The first front-end module may enable downlink communication in a normal power mode of operation. The second front-end module may enable uplink and downlink communications in the normal power mode of operation.

### Brief description of the drawings

Example embodiments will now be described, by way of non-limiting examples, with reference to the following schematic drawings, in which:
FIG. 1 is a block diagram showing a communication system in which the present invention may be used;
FIG. 2 is a block diagram showing a system in accordance with an example embodiment;
FIG. 3 shows a message flow sequence in accordance with an example embodiment;
FIG. 4 is a block diagram showing a system in accordance with an example embodiment;
FIG. 5 is a flowchart showing an algorithm in accordance with an example embodiment;
FIGS. 6 to 10 are block diagrams showing front-end modules in accordance with example embodiments;
FIG. 11 is a flowchart showing an algorithm in accordance with an example embodiment;
FIGS. 12 to 16 are block diagrams showing systems in accordance with example embodiments;
FIG. 17 is a schematic diagram of components of one or more of the example embodiments described previously; and
FIG. 18 shows tangible media for storing computer-readable code which when run by a computer may perform methods according to example embodiments described herein.

### Detailed description

The scope of protection sought for various embodiments of the invention is set out by the independent claims. The embodiments and features, if any, described in the specification that do not fall under the scope of the independent claims are to be interpreted as examples useful for understanding various embodiments of the invention.

In the description and drawings, like reference numerals refer to like elements throughout.

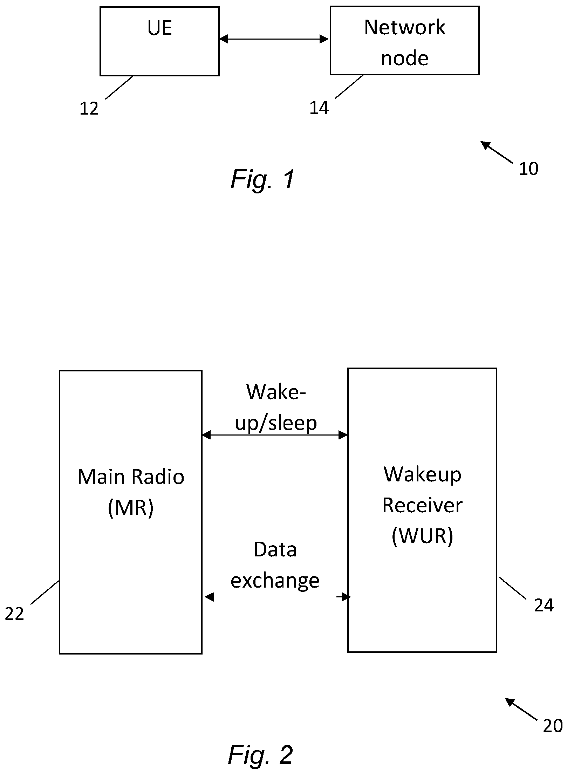

FIG. 1 is a block diagram showing a communication system, indicated generally by the reference numeral 10, in which the present invention may be used. The system comprises a user equipment (UE) 12 and a network node 14. The UE 12 and network node 14 are in two-way communication with each other.

The system 10 may be a 3GPP-based communication system, such as a 5G New Radio (NR) system. The principles described herein may, for example, be relevant to a 3GPP-based communication system including devices without a continuous energy source, such as UEs using small rechargeable or non-rechargeable single coin cell batteries (including sensors and actuators that are deployed extensively for monitoring, measuring, charging, etc). Other example use cases include wearables such as smart watches, rings, eHealth related devices, and medical monitoring devices, for which it may be challenging to sustain up to 1-2 weeks, as may be required, with typical battery capacity.

Some of the UE types named above (e.g. sensors, actuators and wearables) not only require a long battery life, but also require latency-critical services (such as sensors for fire detection and extinguishing, to name an example). Therefore, solutions such as eDRX (allowing to extend the periodicity by which the UE wakes up to monitor for paging, which in turn reduces the average power consumption) are not applicable as eDRX would lead to unacceptable communication latency.

It should be noted that although the principles described herewith are application to systems including UEs having small batteries, the principles are also applicable in other systems, for example to smartphone applications.

FIG. 2 is a block diagram showing a system, indicated generally by the reference numeral 20, in accordance with an example embodiment. The system 20 comprises a main radio (MR) module 22 and wakeup receiver (WUR) module 24. The MR module 22 and wakeup receiver module 24 may form part of the UE 12 or some similar device.

The wake-up receiver (WUR) 24 may be provided to help to reduce UE power consumption. For example, the MR module 22 can be in a sleep mode (or even powered off) for power saving and be activated only upon the reception of the wake-up signal (WUS) from a network (such as the network node 14). Thus, for example, the network can trigger the UE to wake-up when needed in an event-driven manner, by transmitting a special wake-up signal (WUS) to the UE, which is monitored by the WUR 24 at the UE. When a UE receives the WUS, the WUR 24 can trigger the wake-up of the transceiver that forms part of the main radio module 22 and communications can start. Thus, the WUR 24 can wake up the main radio as required from an OFF or deep sleep mode. The WUR 24 may operate in an always-on manner with very low power consumption.

The power saving schemes described herein may be applied in advanced smartphone 5G UE designs where the hardware design has support for multiband operation and where all available transceiver paths of the UE are confined to the design criteria to meet 5G signal compliance, while also supporting legacy systems back to 2G. 5G seeks deployment opportunities also for use cases with different device requirements compared to smartphones, and some of these devices require very low power consumption in order to enable a significant operating time/battery lifetime.

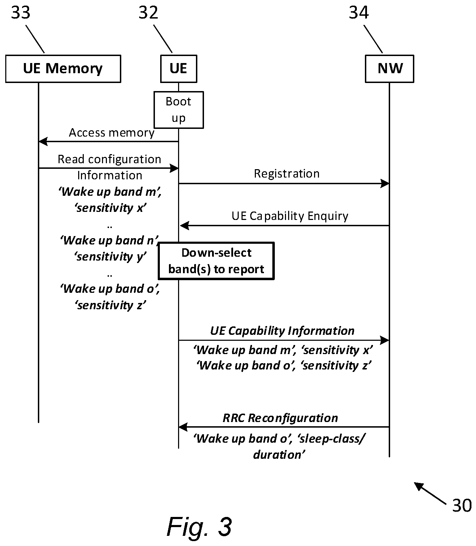

FIG. 3 shows a message flow sequence, indicated generally by the reference numeral 30, in accordance with an example embodiment. The message flow sequence 30 shows messages between a UE 32 (such as the UE 12 described above), a UE memory 33, and a network node 34 (such as the network node 14 described above). The message flow sequence 30 (and all other message flow sequences described herein) may also be referred to as a message sequence chart.

The message flow sequence 30 shows how the UE 32 may read the configuration information of the UE device from UE memory 33 upon boot up. Once the information is available to the UE 32 and after the UE has registered in the network 34, the UE 32 may exchange a list or subset of bands for which the UE can support the advanced power saving scheme of WUS. This may include additional information such as one or more of: associated sensitivity level, LP-WUR capability for connected mode, ability to do RRM measurements in idle mode, ability to support multiple modes of decoding, and clock stability indication. The UE 32 may scan only the received wake up band from the network 34 in a configuration (which is power efficient), while the network 34 advantageously knows which band the UE 32 allocates the functionality for including the former mentioned information that indicates the UE behaviour and capabilities in LP-WUR state.

The choice of bands to report can be based on one or more of: power efficient states of logic circuits (latched ports), best receiver NF (coverage), and/or lowest current consumption of hardware components.

If the UE 32 is not using the message flow sequence 30, the UE 32 may on its own limit the advanced power saving scheme to the active bands where the network 34 supports the feature and choose which band to assign the WUS state on its own among the network-supported bands.

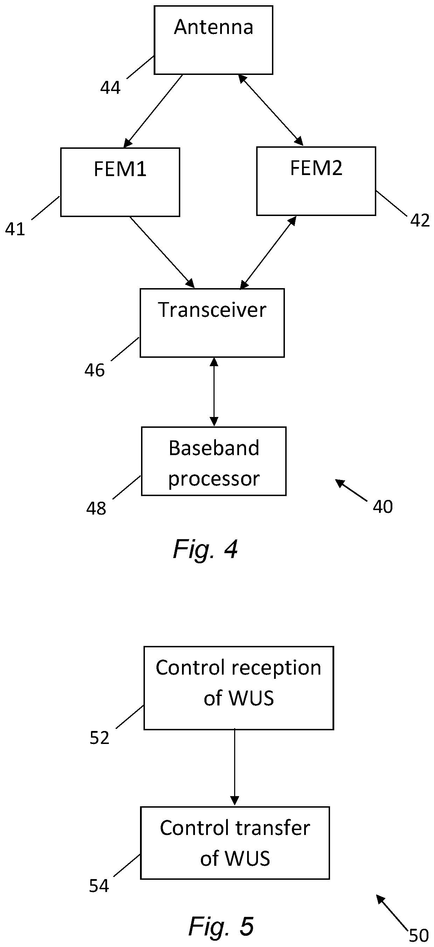

FIG. 4 is a block diagram showing a system, indicated generally by the reference numeral 40, in accordance with an example embodiment. The system 40 is an example implementation of the user equipments (UEs) described herein (such as the UE 12 or the UE 32). The UE may be a smartphone, but, as discussed in detail elsewhere, the UE could be a sensor, an IoT device, a wearable device, or some other device. Many other example implementations will be apparent to the skilled person.

The system 40 comprising a first front-end module (FEM) 41, a second front-end module 42, one or more antennas 44 is communication with the first and second FEMs, a transceiver module 46 and a baseband processor 48. As shown in FIG. 4, the first and second FEMs 41, 42 are provided between the transceiver module 46 and antenna(s) 44.

As discussed in detail below, the system 40 may be operable in either a low power mode or a normal power mode. A radio module of the transceiver 46 may be powered down in the low power mode of operation.

In the example embodiments shown in FIG. 4, the first front-end module 41 enables downlink communication in a normal power mode of operation and the second front-end module 42 enables both uplink and downlink communications in the normal power mode of operation. The first front-end module 41 may be a diversity module of the UE. The second front-end module 42 may be a main radio module of the UE.

Note that although a single first FEM 41 and a single second FEM 42 are shown in FIG. 4, this is not essential to all example embodiments. A plurality of first (downlink) FEMs 41 and/or a plurality of second (downlink and uplink) FEMs 42 may be provided.

The first front-end module 41 and the second front-end module 42 may be able to operate in parallel, such that, in use, downlink signals can be simultaneously provided to the transceiver module 46 via both the first and the second FEMs.

As discussed further below, at least one of the first and the second front-end modules may support multiple frequency bands. For example, one or both FEMs may include multiple bandpass filters. Algorithms for using the FEMs may include selecting a single frequency band of the first front-end module 41 for receiving the wake-up signal in the low power mode of operation (as discussed above, for example, with reference to FIG. 3).

FIG. 5 is a flowchart showing an algorithm, indicated generally by the reference numeral 50, in accordance with an example embodiment. The algorithm 50 may be implemented by the system 40 described above. More specifically, the algorithm 50 may be implemented by a control module that forms part of the front-end module 41 (as discussed in detail below). Alternatively, the algorithm 50 may be implemented in a transceiver of a UE (such as the transceiver 46), with the algorithm 50 controlling the operation of, for example, a front-end module such as the first front-end module 41.

The algorithm 50 starts at operation 52, which comprises controlling reception of a wake-up signal (WUS) in a low power mode of operation. The WUS may be received (and the reception controlled) at the first front-end module 41 of the system 40. The WUS may be received from a network node of the relevant mobile communication system (e.g. the network node 14 or the network 34 described above). As discussed below, some (e.g. most, of even all) modules of the system other than relevant parts of the first FEM 41 and the wake-up receiver (WUR) may be disabled or disconnected from a power supply in the low power mode. The WUR (such as the WUR 24 described above) may form part of the transceiver, but may be separate from the transceiver (as discussed in detail below).

At operation 54, the transfer of the received wake-up signal (WUS) from the first front-end module 41 to an output of the first front-end module is controlled in the low power mode of operation. Transferring the WUS may involve latching the signal to an output of the first FEM 41 (this latching may, for example, be implemented by the wakeup control block 64 discussed below). The WUS may be transferred to a wake-up receiver (WUR) such as the WUR 24 described above.

Thus, the first front-end module 41 implements a normal mode of operation and a new mode of operation, wherein the new mode of operation serves a low power mode in which the same front-end module is used in both modes of operation.

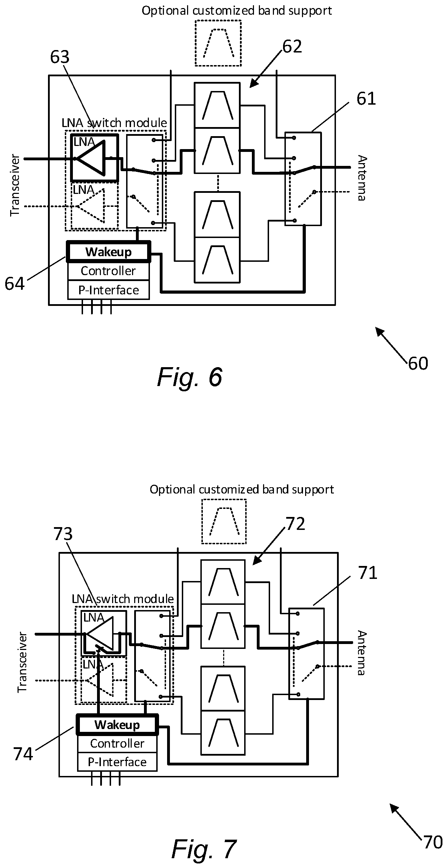

FIGS. 6 to 10 described below show a number of example implementations of the first front-end module (FEM) 41 that can be used to support a low power mode of operation. These front-end modules are modifications of diversity modules. However, it should be noted that the principles described herein are not restricted to the examples described herein; other front-end modules (including other receiver-only/downlink front-end modules) could be used to implement the first FEM 41.

FIG. 6 is a block diagram showing a front-end module, indicated generally by the reference numeral 60, in accordance with an example embodiment. The front-end module 60 is an example implementation of the first FEM 41 described above and may be provided between an antenna (such as the antenna 44) and a transceiver (such as the transceiver 46).

The front-end module 60 comprises an antenna switch module 61, a plurality of band pass filters 62, a low-noise amplifier (LNA) switch module 63, and a number of control modules, including a wakeup control block 64.

In the front-end module 60, the wakeup control block 64 transfers (e.g. latches) an output of a selected bandpass filter 62 that implements a programmed band configuration that matches the desired band of operation in WUS mode. In some embodiments, only the wakeup block 64 of the first front-end module 60 is required to be supplied from a voltage source to maintain the configuration, meaning that the state of the first front-end module is static. In this first embodiment a low noise amplifier (LNA) is in use, which potentially results in a higher power consumption, but allows a better sensitivity of the receiver than some other example embodiments discussed below. Note that this embodiment may connect to a transceiver (such as the transceiver 46) through conventional interconnection of the RF ports under the condition that the wake-up receiver (WUR) is integrated into the transceiver.

The LNA switch module 63 controls a low noise amplifier of the front-end module to amplify said wake-up signal in the low power mode of operation.

FIG. 7 is a block diagram showing a front-end module, indicated generally by the reference numeral 70, in accordance with an example embodiment. The front-end module 70 is an example implementation of the first FEM 41 described above and may be provided between an antenna (such as the antenna 44) and a transceiver (such as the transceiver 46).

The front-end module 70 comprises an antenna switch module 71, a plurality of band pass filters 72, a low-noise amplifier (LNA) switch module 73, and a number of control modules, including a wakeup control block 74. In the front-end module 70, the wakeup control block 74 transfers (e.g. latches) an output of a selected bandpass filter 72 that implements a programmed band configuration that matches the desired band of operation in WUS mode.

In the front-end module 70, the LNA switch module 73 is configurable, which allows the wakeup control block 74 to either include or bypass the low noise amplifier in a signal path. For example, the wakeup control block 74 can control routing of the wake-up signal within the front-end module such that a low noise amplifier of the front-end module is bypassed in the low power mode of operation. In the normal (higher power) mode of operation, the LNA may be included in the signal path, as normal. By bypassing the LNA, the front-end module 70 may consume less power than the front-end module 60 in the low power mode of operation. Note that this embodiment may connect to a transceiver (such as the transceiver 46) through conventional interconnection of the RF ports under the condition that the wake-up receiver (WUR) is integrated into the transceiver.

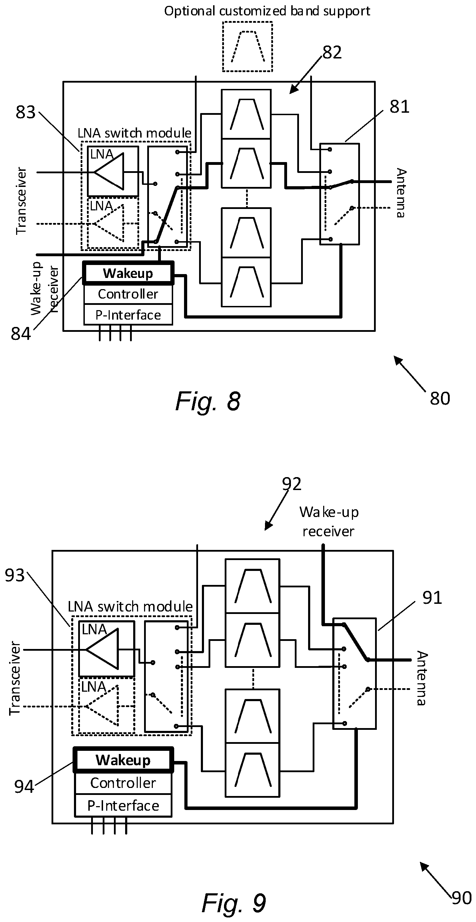

FIG. 8 is a block diagram showing a front-end module, indicated generally by the reference numeral 80, in accordance with an example embodiment. The front-end module 80 is an example implementation of the first FEM 41 described above and may be provided between an antenna (such as the antenna 44) and a transceiver (such as the transceiver 46).

The front-end module 80 comprises an antenna switch module 81, a plurality of band pass filters 82, a low-noise amplifier (LNA) switch module 83, and a number of control modules, including a wakeup control block 84.

In FIG. 8, LNA switch module 83 may have a third output option that routes the RF signal to an alternate port of the FEM 80. This output can be used by an external WUS chipset. In the normal (higher power) mode of operation, the usual transceiver connections may be used.

In the front-end module 80, the antenna switch module 81 is configurable, which allows the wakeup control block 84 to route the wake-up signal within the front-end module such that one or more bandpass filters 82 of the front-end module can be bypassed in the low power mode of operation. In the normal (higher power) mode of operation, one or more selected bandpass filters may be used, as normal.

In addition, the wakeup control block 84 may be able to control routing of the wake-up signal within the front-end module such that the wake-up signal is routed to a dedicated port of the front-end module in the low power mode of operation. This output may, for example, be used by an external wake-up signal (WUS) chipset. In the normal (higher power) mode of operation, the usual transceiver connections may be used.

FIG. 9 is a block diagram showing a front-end module, indicated generally by the reference numeral 90, in accordance with an example embodiment. The front-end module 90 is an example implementation of the first FEM 41 described above and may be provided between an antenna (such as the antenna 44) and a transceiver (such as the transceiver 46).

The front-end module 90 comprises an antenna switch module 91, a plurality of band pass filters 92, a low-noise amplifier (LNA) switch module 93, and a number of control modules, including a wakeup control block 94.

In the front-end module 90, the antenna switch module 91 is configurable, which allows the wakeup control block 94 to route the wake-up signal within the front-end module to a dedicated port of the front-end module in the low power mode of operation. This routing avoids both the band pass filters 92 and the LNA 93; for example, an unfiltered signal may be provided, on a dedicated pin, to a WUS chipset. In the normal (high power) mode of operation, the signal may be routed from the antenna to the transceiver via the band pass filters 92 and the LNA 93.

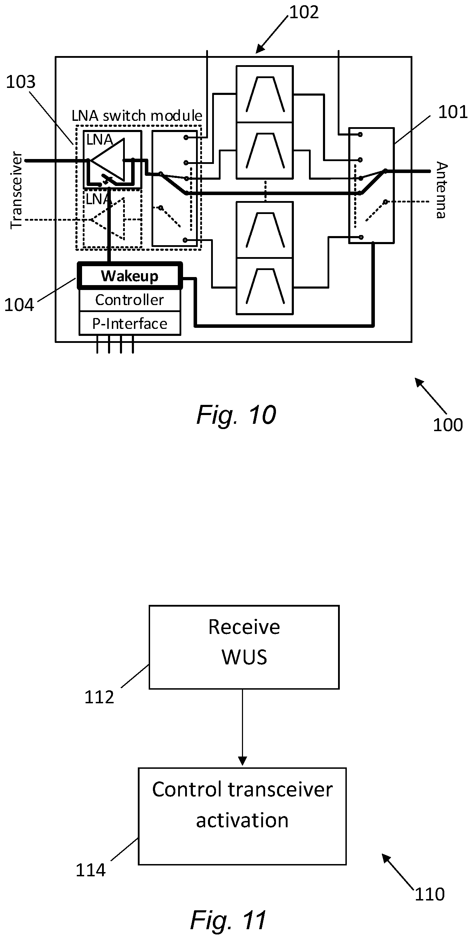

FIG. 10 is a block diagram showing a front-end module, indicated generally by the reference numeral 100, in accordance with an example embodiment. The front-end module 100 is an example implementation of the first FEM 41 described above and may be provided between an antenna (such as the antenna 44) and a transceiver (such as the transceiver 46).

The front-end module 100 comprises an antenna switch module 101, a plurality of band pass filters 102, a low-noise amplifier (LNA) switch module 103, and a number of control modules, including a wakeup control block 104.

In the front-end module 100, the antenna switch module 101 is configurable, which allow the wakeup control block 104 to route the wake-up signal within the front-end module to the LNA amplifier (bypassing the band pass filters 102) in the low power mode of operation. Moreover, the LNA switch module 103 is configurable such that the wakeup control block 104 can control routing of the wake-up signal within the front-end module such that a low noise amplifier of the front-end module is bypassed in the low power mode of operation. In the normal (higher power) mode of operation, the band pass filters and the LNA may be used, as normal.

Thus, FIG. 10 shows an embodiment with bypass options for front-end filtering and amplification, transferring the unfiltered RF signal for down-conversion. This could be an option that is attractive to certain dedicated devices in a controlled (known RF interference-free) environment. Note that this embodiment may connect to a transceiver (such as the transceiver 46) through conventional interconnection of the RF ports under the condition that the wake-up receiver (WUR) is integrated into the transceiver.

FIG. 11 is a flowchart showing an algorithm in accordance with an example embodiment. The algorithm 110 may be implemented using the system 40 described above. More specifically, the algorithm 110 may be implemented by a control module that forms part of the transceiver 46 or is in communication with the transceiver.

The algorithm 110 starts at operation 112, where a wake-up signal (WUS) is received from a first front-end module (e.g. FEM 41 or one of FEMs 60 to 100 described above) in a low power mode of operation. The WUS may be received at a wake-up receiver (WUR), as discussed below.

At operation 114, activation of a radio module is controlled in response to the wake-up signal received in the operation 112. The operation 114 may be implemented by triggering a wake-up signal to a main radio module (e.g. the MR module 22 described above). The radio module that is activated may be a transceiver integrated radio module (such as the transceiver 46).

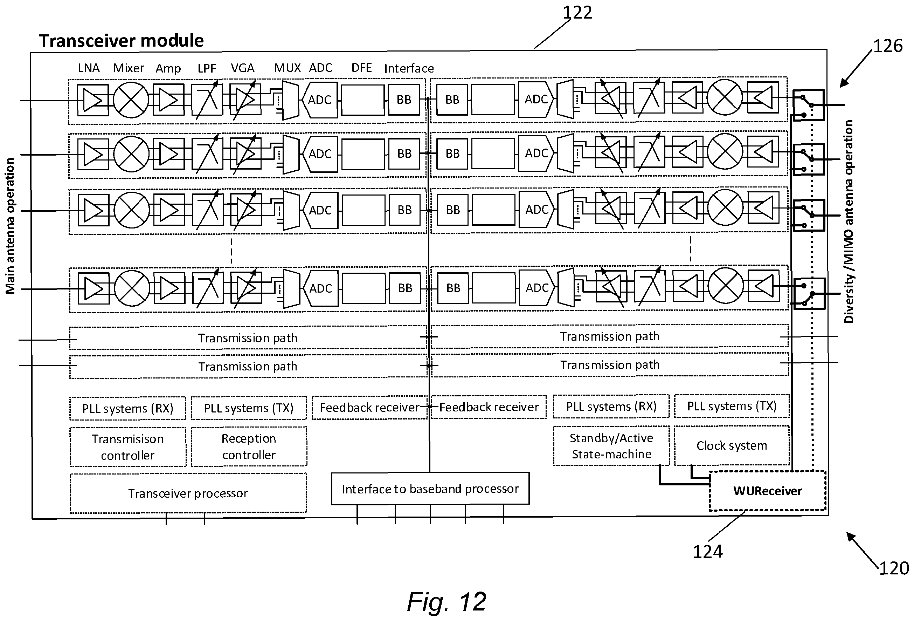

FIG. 12 is a block diagram showing a system, indicated generally by the reference numeral 120, in accordance with an example embodiment. The system 120 comprises a transceiver module 122 including a wake-up receiver (WUR) 124 and switch modules 126.

The transceiver module 122 includes a main Tx and Rx part (on the left-hand side of the figure) and an Rx-only part (on the right-hand side of the figure). The switch modules 126 perform switching for the Rx-only part.

The switching modules 126 are configured to provide an output of a first front-end module (as described above) to the WUR 124 in the low power mode of operation and to provide the output of the first front-end module to a radio module of the transceiver (e.g. the Rx-only radio module) in a normal power mode of operation.

In the transceiver 120, the WUR 124 forms part of the transceiver; however, this is not essential to all example embodiments, as discussed further below.

The switching modules 126 can be used to route the downlink signal either to the RF transceiver 122 or to the WUS receiver (which may form part of the transceiver 122 - as shown in FIG. 12 - or may be a separate module). The switches 126 are integrated into the RF transceiver and can be used to bypass the conventional receiver circuitry of the transceiver (i.e. bypassing the receiver circuit of the main radio module). Thus, the relevant front-end module that carries the band supporting the WUS configuration can be routed to the dedicated WUS receiver (WUR) 124. The WUR 124 can be managed by a Standby/Active state machine inside the transceiver module 122, and may run from the clock system available to the transceiver, which could be shared with the conventional clock of the modem (i.e. the main radio module clock), or a unique dedicated low power sleep clock strictly for the purpose of LP-WUR using the exchange information to optionally inform the NW of clock accuracy in this dedicated mode. As noted above, the switches 126 are placed on the receive-only (e.g. diversity paths) of the transceiver module, which may have a better sensitivity (e.g. noise figure) than the counterparts of the main antenna operation side (shown on the left of the figure).

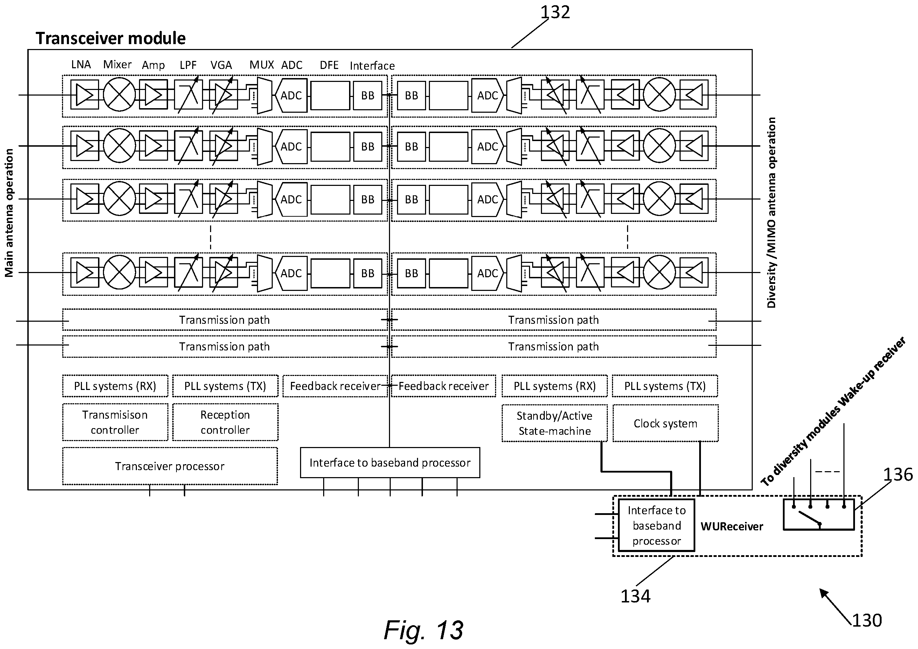

FIG. 13 is a block diagram showing a system, indicated generally by the reference numeral 130, in accordance with an example embodiment. The system 130 comprises a transceiver module 132 and a separate wake-up receiver (WUR) 134 provided outside the transceiver. The WUR 134 includes a switch module 136. The switching module 136 is configured to select an output from a first front-end module (as described above) that is provided to the WUR 134 in the low power mode of operation.

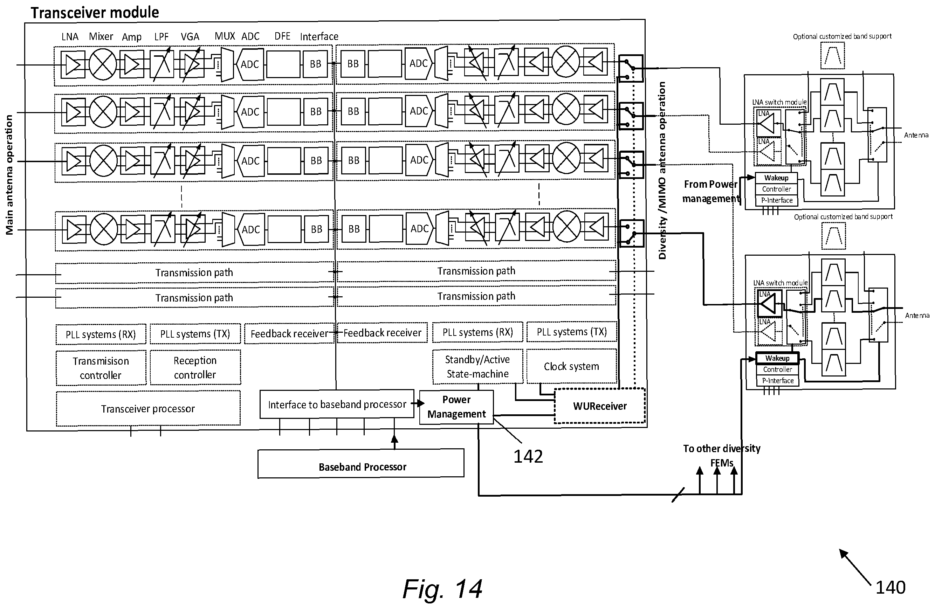

In the systems 120 and 130, the WUR 124 or 134 can be operational in a low power mode, without requiring the rest of the transceiver module to be operational (thereby saving power). In some example implementations, an existing power supply domain may connect to circuit blocks that are not required to be "on" during the WUS mode. Without a power supply domain (e.g. a dedicated power supply domain) with sequences and timing for the respective WUR, some of the unused parts of the main transceiver module may be unnecessarily powered. A power supply domain for the purpose of serving, for example, only the circuits required for WUS reception may be provided. Three example implementations are shown in FIGS. 14 to 16, which are discussed below. These figures also show how a front-end module (e.g. an Rx-only front-end module) that supports the different implementation methods may connect relative to the implementation of the WUR.

FIG. 14 is a block diagram showing a system, indicated generally by the reference numeral 140, in accordance with an example embodiment. The system 140 shows an embodiment in which integrated power management module 142 is provided for a transceiver integrated WUR receiver. Thus, power management is integrated into the transceiver.

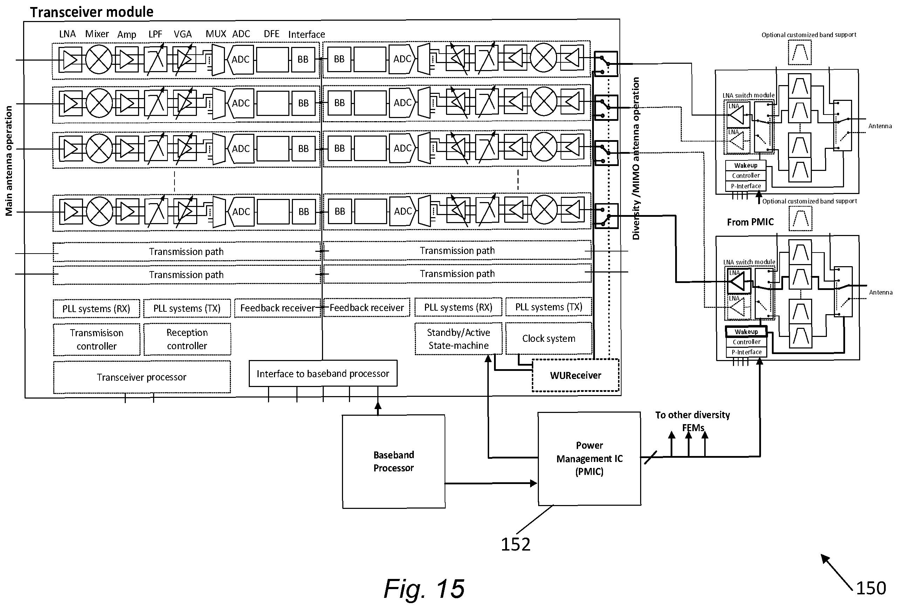

FIG. 15 is a block diagram showing a system, indicated generally by the reference numeral 150, in accordance with an example embodiment. The system 150 shows an embodiment in which an external power management module 152 is provided for a transceiver integrated WUR receiver.

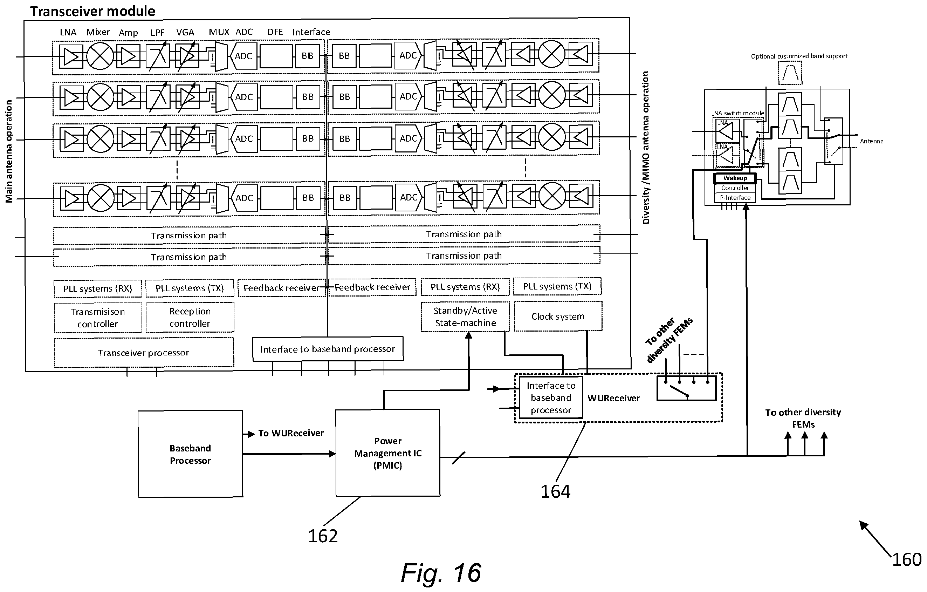

FIG. 16 is a block diagram showing a system, indicated generally by the reference numeral 160, in accordance with an example embodiment. The system 160 shows an embodiment in which an external power management module 162 and an external WUR receiver 164 are provided.

Thus, the systems 140, 150 and 160 provide different configurations for disconnecting a power supply to one or more unused modules of the transceiver in the low power mode of operation.

The embodiments described herein support a low power (or sleep) mode, for example for 5G cellular UE devices supporting multi-band operation adapting to the wake-up. Smart phone type of devices with multiband support can also benefit from adapting to the WUS scheme. Wake-up receiver (WUR) functionality can be implemented, for example, as a new mode of power saving inside the existing diversity modules (or other Rx-only modules). For WUS operation, reception-only embodiments may be implemented and so the use of modified diversity modules may be a good option for WUR receiver front-end integration with a focus on low insertion loss for maximized WUS sensitivity.

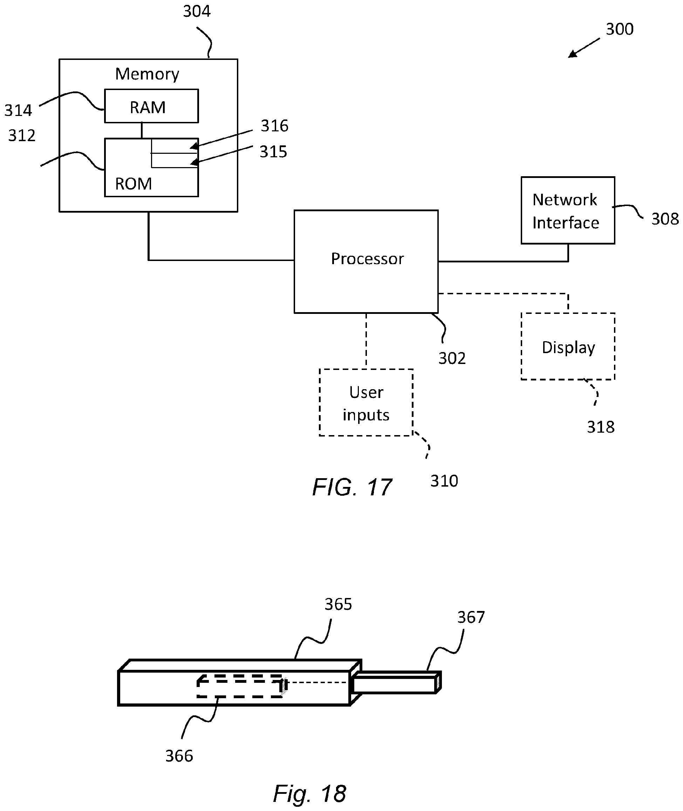

For completeness, FIG. 17 is a schematic diagram of components of one or more of the example embodiments described previously, which hereafter are referred to generically as a processing system 300. The processing system 300 may, for example, be the apparatus referred to in the claims below.

The processing system 300 may have a processor 302, a memory 304 closely coupled to the processor and comprised of a RAM 314 and a ROM 312, and, optionally, a user input 310 and a display 318. The processing system 300 may comprise one or more network/apparatus interfaces 308 for connection to a network/apparatus, e.g. a modem which may be wired or wireless. The network/apparatus interface 308 may also operate as a connection to other apparatus such as device/apparatus which is not network side apparatus. Thus, direct connection between devices/apparatus without network participation is possible.

The processor 302 is connected to each of the other components in order to control operation thereof.

The memory 304 may comprise a non-volatile memory, such as a hard disk drive (HDD) or a solid state drive (SSD). The ROM 312 of the memory 304 stores, amongst other things, an operating system 315 and may store software applications 316. The RAM 314 of the memory 304 is used by the processor 302 for the temporary storage of data. The operating system 315 may contain code which, when executed by the processor implements aspects of the algorithms and sequences 30, 50 and 110 described above. Note that in the case of small device/apparatus the memory can be most suitable for small size usage i.e. not always a hard disk drive (HDD) or a solid state drive (SSD) is used.

The processor 302 may take any suitable form. For instance, it may be a microcontroller, a plurality of microcontrollers, a processor, or a plurality of processors.

The processing system 300 may be a standalone computer, a server, a console, or a network thereof. The processing system 300 and needed structural parts may be all inside device/apparatus such as IoT device/apparatus i.e. embedded to very small size.

In some example embodiments, the processing system 300 may also be associated with external software applications. These may be applications stored on a remote server device/apparatus and may run partly or exclusively on the remote server device/apparatus. These applications may be termed cloud-hosted applications. The processing system 300 may be in communication with the remote server device/apparatus in order to utilize the software application stored there.

FIG. 18 shows a tangible media, in the form of a removable memory unit 365, storing computer-readable code which when run by a computer may perform methods according to example embodiments described above. The removable memory unit 365 may be a memory stick, e.g. a USB memory stick, having internal memory 366 storing the computer-readable code. The internal memory 366 may be accessed by a computer system via a connector 367. Of course, other forms of tangible storage media may be used, as will be readily apparent to those of ordinary skilled in the art. Tangible media can be any device/apparatus capable of storing data/information which data/information can be exchanged between devices/apparatus/network.

Embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

Reference to, where relevant, "computer-readable medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices/apparatus and other devices/apparatus. References to computer program, instructions, code etc. should be understood to express software for a programmable processor firmware such as the programmable content of a hardware device/apparatus as instructions for a processor or configured or configuration settings for a fixed function device/apparatus, gate array, programmable logic device/apparatus, etc.

If desired, the different functions discussed herein may be performed in a different order and/or concurrently with each other. Furthermore, if desired, one or more of the above-described functions may be optional or may be combined. Similarly, it will also be appreciated that the flow diagrams and sequences of Figures 3, 5 and 11 are examples only and that various operations depicted therein may be omitted, reordered and/or combined.

It will be appreciated that the above described example embodiments are purely illustrative and are not limiting on the scope of the invention. Other variations and modifications will be apparent to persons skilled in the art upon reading the present specification.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

Although various aspects of the invention are set out in the independent claims, other aspects of the invention comprise other combinations of features from the described example embodiments and/or the dependent claims with the features of the independent claims, and not solely the combinations explicitly set out in the claims.

It is also noted herein that while the above describes various examples, these descriptions should not be viewed in a limiting sense. Rather, there are several variations and modifications which may be made without departing from the scope of the present invention as defined in the appended claims.

## Claims

1. An apparatus forming part of a user equipment of a mobile communication system, the user equipment comprising a first front-end module, a second front-end module, a transceiver module and a baseband processor, wherein the first and second front-end modules are provided between the transceiver module and one or more antennas, the apparatus comprising:
means for controlling reception of a wake-up signal by the first front-end module in a low power mode of operation; and
means for controlling transfer of the received wake-up signal from the first front-end module to an output of the first front-end module in the low power mode of operation,
wherein:
the first front-end module enables downlink communication in a normal power mode of operation; and
the second front-end module enables uplink and downlink communications in the normal power mode of operation.

2. An apparatus as claimed in claim 1, further comprising means for receiving said wake-up signal from a network node of the mobile communication system.

3. An apparatus as claimed in claim 1 or claim 2, wherein the apparatus is, or forms part of, the first front-end module of the user equipment.

4. An apparatus as claimed in any one of the preceding claims,
wherein the means for controlling the transfer of the received wake-up signal comprises at least one of the following:
means for controlling a low noise amplifier of the first front-end module to amplify said wake-up signal in the low power mode of operation;
means for controlling routing of the wake-up signal within the first front-end module such that a low noise amplifier of the first front-end module is bypassed in the low power mode of operation;
means for controlling routing of the wake-up signal within the first front-end module such that one or more filters of the first front-end module are bypassed in the low power mode of operation;
means for controlling routing of the wake-up signal within the first front-end module such that one or more filters of the first front-end module are bypassed in the low power mode of operation; or
means for controlling routing of the wake-up signal within the first front-end module such that the wake-up signal is routed to a dedicated port of the first front-end module in the low power mode of operation.

5. An apparatus as claimed in any one of the preceding claims, wherein:
the first and second front-end modules operate in parallel, such that, in use, downlink signals can be simultaneously provided to the transceiver module via both the first and the second front-end modules; and/or
the first front-end module is a receive only module of the user equipment.

6. An apparatus as claimed in any one of the preceding claims, wherein a radio module of the transceiver is powered down in the low power mode of operation.

7. An apparatus forming part of a user equipment of a mobile communication system, the user equipment comprising a first front-end module, a second front-end module, a transceiver module and a baseband processor, wherein the first and second front-end modules are provided between the transceiver module and one or more antennas, the apparatus comprising:
means for receiving a wake-up signal from the first front-end module in a low power mode of operation; and
means for controlling activation of a radio module of the transceiver in response to the wake-up signal,
wherein:
the first front-end module enables downlink communication in a normal power mode of operation; and
the second front-end module enables uplink and downlink communications in the normal power mode of operation.

8. An apparatus as claimed in claim 7, wherein the transceiver comprises a switching module that is configured to provide an output of the first front-end module to the apparatus in the low power mode of operation and to provide the output of the first front-end module to the radio module of the transceiver in a normal power mode of operation.

9. An apparatus as claimed in claim 7 or claim 8, wherein the apparatus forms part of the transceiver.

10. An apparatus as claimed in claim 7, wherein the apparatus comprises:
a switching module for providing an output of the first front-end module to the apparatus in the low power mode of operation; and
an output for providing a signal to the transceiver module to control activation of said radio module.

11. An apparatus as claimed in any one of the preceding claims, further comprising:
means for disconnecting a power supply to one or more unused modules in the low power mode of operation; and/or
means for selecting a single frequency band of the first front-end module for receiving the wake-up signal in the low power mode of operation.

12. An apparatus as claimed in any one of the preceding claims, at least one of the first and the second front-end modules support multiple frequency bands.

13. A method comprising:
controlling reception of a wake-up signal by a first front-end module of a user equipment of a mobile communication system in a low power mode of operation, wherein the user equipment comprises the first front-end module, a second front-end module, a transceiver module and a baseband processor, wherein the first and second front-end modules are provided between the transceiver module and one or more antennas; and
controlling transfer of the received wake-up signal from the first front-end module to an output of the first front-end module in the low power mode of operation,
wherein:
the first front-end module enables downlink communication in a normal power mode of operation; and
the second front-end module enables uplink and downlink communications in the normal power mode of operation.

14. A method comprising:
receiving a wake-up signal from a first front-end module of a user equipment of a mobile communication system in a low power mode of operation, wherein the user equipment comprises the first front-end module, a second front-end module, a transceiver module and a baseband processor, wherein the first and second front-end modules are provided between the transceiver module and one or more antennas; and
controlling activation of a radio module of the transceiver in response to the wake-up signal,
wherein:
the first front-end module enables downlink communication in a normal power mode of operation; and
the second front-end module enables uplink and downlink communications in the normal power mode of operation.

15. A computer program comprising instructions which, when executed by an apparatus, cause the apparatus to:
control reception of a wake-up signal by a first front-end module of a user equipment of a mobile communication system in a low power mode of operation, wherein the user equipment comprises the first front-end module, a second front-end module, a transceiver module and a baseband processor, wherein the first and second front-end modules are provided between the transceiver module and one or more antennas; and
control transfer of the received wake-up signal from the first front-end module to an output of the first front-end module in the low power mode of operation,
wherein:
the first front-end module enables downlink communication in a normal power mode of operation; and
the second front-end module enables uplink and downlink communications in the normal power mode of operation.
